# EUROPÄISCHE PATENTSCHRIFT

(11) **EP 1 536 170 B1**
(45) Veröffentlichungstag und Bekanntmachung des Hinweises auf die Patenterteilung: **20.12.2006**
(21) Anmeldenummer: 04026769.2
(22) Anmeldetag: 11.11.2004
(51) Int. Cl.: F16K 47/12, F16K 3/26

(54) **Ventil**
Valve
Soupape

(30) Priorität: 28.11.2003 DE 10355695
(43) Veröffentlichungstag der Anmeldung: 01.06.2005
(73) Patentinhaber: Avet AG, 8630 Rüti/Zürich (CH)
(72) Erfinder: Sacks, Roland, 8608 Bubikon (CH)
(74) Vertreter: Maucher, Wolfgang

(56) Entgegenhaltungen:
- US-A- 3 018 041
- US-A- 5 449 145
- US-A1- 2002 027 212
- US-A1- 2002 033 463

## Beschreibung

Die Erfindung bezieht sich auf ein Ventil mit einem Ventilgehäuse, das einen Medium-Einlass und einen Medium-Auslass sowie ein darin geführtes, verstellbares, mit einem Betätigungsorgan verbindbares Verschlusselement zum Öffnen und Schließen des Ventils aufweist, wie es aus der US 5,449,145 bekannt ist.
Solche Ventile sind in den unterschiedlichsten Ausführungsformen bereits bekannt. Beispielsweise kann das Verschlusselement einen Ventilkegel aufweisen, der in Schließstellung an einem sich konisch erweiternden Ventilsitz des Gehäuses anliegt. Zum Öffnen des Ventils wird das Verschlusselement axial verschoben, so dass ein Spalt zwischen Ventilkegel und Ventilsitz vorhanden ist, durch den ein zum Beispiel flüssiges Medium hindurchtreten kann.
Häufig werden solche Ventile zur dosierten Abgabe einer Flüssigkeit eingesetzt. Dabei sind jedoch für vergleichsweise große Dosiermengenunterschiede nur kleine Betätigungswege vorhanden, so dass eine feinfühlige Dosierung bei manueller Betätigung problematisch ist.

Aufgabe der vorliegenden Erfindung ist es, ein Ventil der eingangs erwähnten Art zu schaffen, das eine feinfühlige Dosierung ermöglicht und einen einfachen Aufbau aufweist.

Zur Lösung dieser Aufgabe wird vorgeschlagen, dass das Verschlusselement als Schiebekolben mit wenigstens einer sich in Längsrichtung erstreckenden und in Schieberichtung hinsichtlich ihres Querschnitts stetig verändernden Nut ausgebildet ist, die an ihren Enden geschlossen ist, dass eine Schiebeführung mit zwei in Längserstreckung des Verschlusselementes zueinander beabstandeten Dichtungen vorgesehen ist, dass sich die Schiebekolben-Nut in Schließstellung des Ventils zwischen den beiden Dichtungen befindet und Verbindung zu dem Medium-Einlass aufweist und dass das Verschlusselement zumindest mit einem Teilbereich der Nut über eine der Dichtungen in einen mit dem Medium-Auslass verbundenen Bereich verschiebbar ist.
Bei einer Längsverschiebung des als Schiebekolben ausgebildeten Verschlusselementes gelangt die in Schließstellung zwischen den Dichtungen befindliche Nut zunehmend durch den einen Dichtungsbereich, so dass Medium, insbesondere Flüssigkeit, zum Auslass gelangen kann.
Der Querschnittsverlauf der sich in Längsrichtung erstreckenden Nut bestimmt den Durchfluss in Abhängigkeit der Stellung des Schiebekolbens. Nimmt der Querschnitt der Schiebekolben-Nut in Schieberichtung vorzugsweise kontinuierlich ab, so nimmt der Durchfluss mit zunehmender Verschiebung in Öffnungsrichtung zu.
Es ist damit eine besonders feinfühlige Dosierung möglich.

Bevorzugt ist vorgesehen, dass die Schiebekolben-Nut als sich in Längsrichtung fortsetzende Wendel- oder Schraubennut ausgebildet ist und sich vorzugsweise über mehr als eine Windung erstreckt.
Die Nut ist damit auf einem kürzeren Längsabschnitt des Schiebekolbens untergebracht als bei einer achsparallelen Anordnung der Nut, so dass ein kürzerer Betätigungsweg möglich ist. Trotzdem bleibt die feinfühlige Dosierbarkeit erhalten.

Für eine insbesondere manuelle Druckbetätigung des Ventils zum Öffnen ist es zweckmäßig, wenn ein Rückstellelement zum Rückstellen des Verschlusselementes in Schließstellung vorgesehen ist.
Eine Ausführungsform sieht dazu vor, dass als Rückstellelement eine innerhalb des Gehäuses angeordnete Druckfeder vorgesehen ist, die sich einerseits am auslassseitigen Ende des Schiebekolbens und andererseits am Gehäuseboden eines Auslassendstücks abstützt. Damit ist das Rückstellelement im Gehäuseinneren gut geschützt untergebracht.
Eine bevorzugte Ausführungsform einer Rückstelleinrichtung sieht vor, dass das Verschlusselement mit einem das Ventilgehäuse an einem Ende überragenden, schubstangenförmigen Betätigungsorgan verbunden ist, und dass als Rückstellelement eine äußere, zwischen einem Gehäuse-Führungsendstück und einem vorzugsweise tellerförmigen, mit dem Betätigungsorgan verbundenen Widerlager angeordnete Druckfeder vorgesehen ist. Bei dieser Anordnung stützt sich die Druckfeder außen am Gehäuse ab, so dass der Gehäuseboden unbelastet bleibt. Insbesondere bei einer Ausführungsform mit integrierter Hubbegrenzung, bei der Anschlagkräfte ebenfalls sonst auf den Gehäuseboden übertragen werden, ist die außenliegende Rückstelleinrichtung vorteilhaft und widersteht auch robusten Bedienungen.

Die Hubbegrenzung ist für die Endlagen des Schiebekolbens einerseits in Schließstellung und andererseits in maximaler Offenstellung mit einem maximalen Hub etwa entsprechend der axialen Länge der Schiebekolben-Nut vorgesehen, wobei vorzugsweise eine Anschlagdämpfung in den Endlagen insbesondere in Form von elastischen Zwischenstücken vorgesehen ist.
Die Anschlagdämpfung dient einerseits zur Geräuschminderung und trägt dazu auch dazu bei, die Bauteile belastende Stöße zu reduzieren.

Vorzugsweise ist die Hubbegrenzung des Schiebekolbens zumindest in Offenstellung verstellbar.
Damit kann insbesondere bei Einsatz des Ventils als Dosierventil die maximale Dosiermenge voreingestellt werden.
Gerade bei Einsatz des Ventils als Teil eines Reinigungsgerätes zum dosierten Abgeben von Reinigungsflüssigkeit, Desinfektionsmittel oder dergleichen ist dies von Vorteil bei der Handhabung.
Bei dieser Anwendung ist das Ventil unterhalb eines Flüssigkeitsvorratsbehälters angeordnet, mit dem der Medium-Einlass des Ventils verbunden ist.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1 bis Fig. 3: unterschiedliche Seitenansichten einer ersten Ausführungsform eines erfindungsgemäßen Ventils,
- Fig. 4: eine Seitenansicht eines Schiebekolbens mit einer Wendel- oder Schraubennut,
- Fig. 5: den in Fig.4 gezeigten Schiebekolben in Längsschnittdarstellung,
- Fig. 6: eine perspektivische Ansicht des in Fig.4 und 5 gezeigten Schiebekolbens,
- Fig. 7: eine vergrößerte Teilansicht des Wendel- oder Schraubennut-Bereichs des in Fig.6 gezeigten Schiebekolbens,
- Fig. 8: eine Längsschnittdarstellung einer weiteren Ausführungsform eines erfindungsgemäßen Ventils und
- Fig. 9: eine Seitenansicht des in Fig.8 gezeigten Ventils.

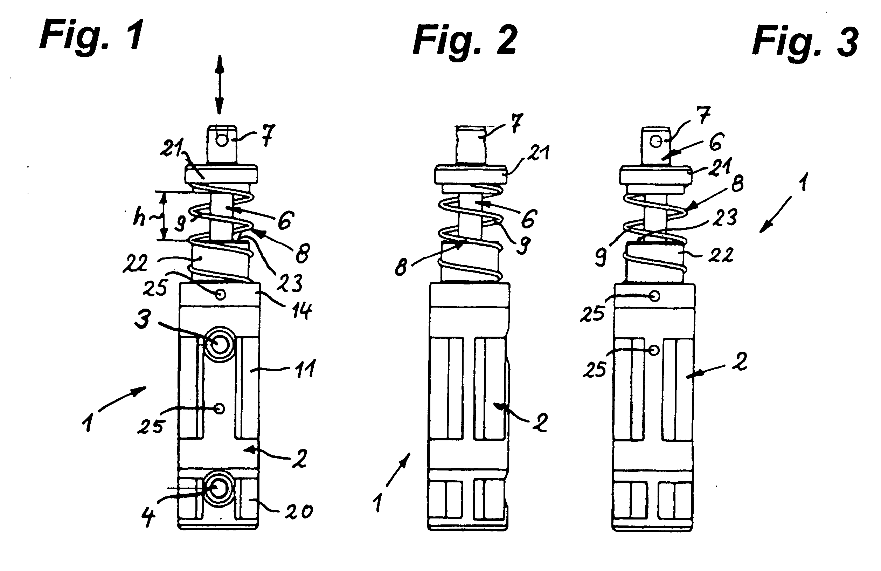

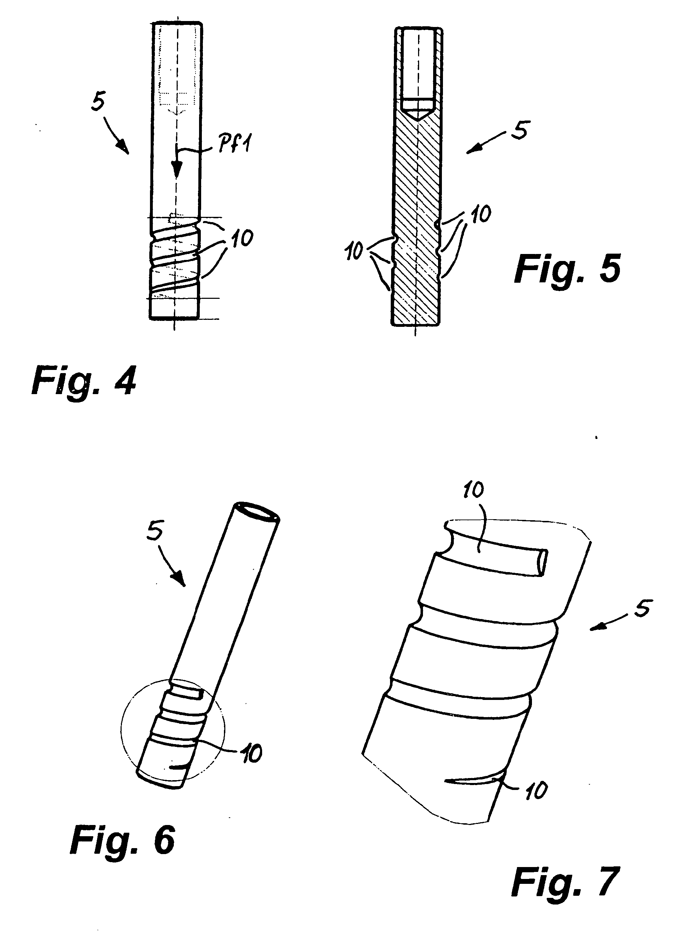

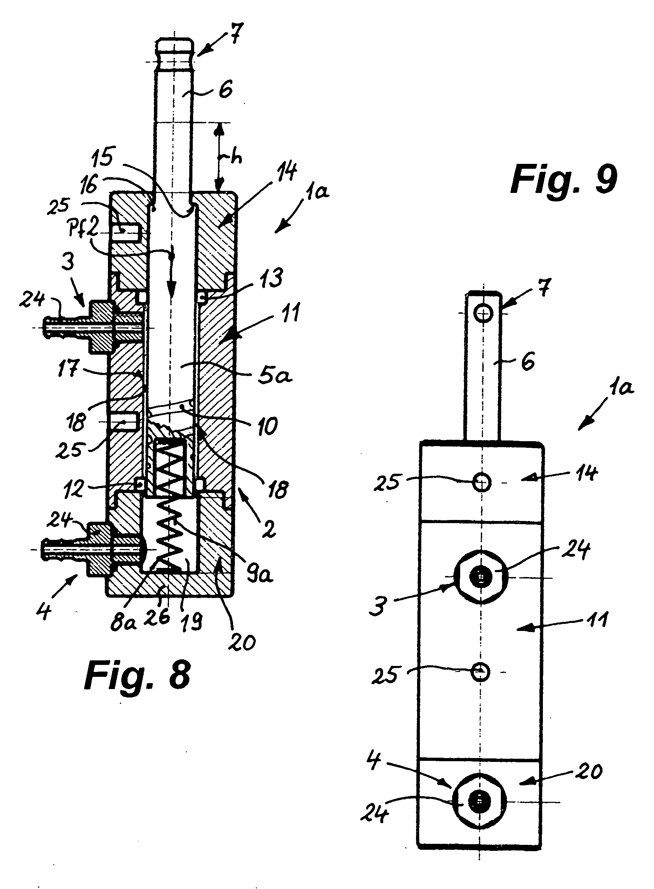

In den Fig.1 bis 3 sind unterschiedliche Ansichten eine Ventils 1 gezeigt. Dieses Ventil weist ein Ventilgehäuse 2 mit einem Medium-Einlass 3 sowie einem Medium-Auslass 4 auf. Zur Betätigung eines im Inneren des Ventils 1 verschiebbar geführten Schiebekolben 5 (vgl. Fig.4 bis 8) ist ein schubstangenförmiges Betätigungsorgan 6 vorgesehen. Dieses kann gegebenenfalls auch ein einstückiges Bestandteil des Schiebekolbens 5 sein, wie dies in Fig.8 vorgesehen ist. Am oberen Ende des Betätigungsorgans 6 ist ein Anschluss 7 zum Verbinden mit beispielsweise einem Betätigungsgestänge vorgesehen, das an seinem anderen Ende eine Handhabe, beispielsweise einen Druckkopf zum Betätigen aufweisen kann. In der in den Fig.1 bis 3 gezeigten Position des Betätigungsorgans 6 befindet sich das Ventil in Schließstellung. Es ist ein Rückstellelement 8 in Form einer Druckfeder 9 vorgesehen, mittels der das Betätigungsorgan 6 nach einer Betätigung selbsttätig in die in Fig.1 bis 3 gezeigte Position und damit in Schließstellung des Ventils gebracht wird.

Der Medium-Einlass 3 kann mit einem oberhalb angeordneten Flüssigkeitsvorratsbehälter verbunden sein, so dass Flüssigkeit bei dem Medium-Auslass 4 beim Betätigen des Ventils dosiert austreten kann.

Um ein solches dosiertes Abgeben von Medium, insbesondere Flüssigkeit zu erreichen, ist der ein Verschlusselement bildende Schiebekolben 5 (Fig.4 bis 7) mit einer sich in Längsrichtung des Schiebekolbens 5 erstreckenden Nut 10 versehen, die bevorzugte, wie dargestellt, als Wendel- oder Schraubennut ausgebildet ist. In den Fig.4 bis 7 ist gut erkennbar, dass sich diese Wendel- oder Schraubennut 10 über mehrere, im Ausführungsbeispiel drei Windungen erstreckt und in ihrem Querschnitt in Schieberichtung gemäß dem Pfeil Pf 1 kontinuierlich abnimmt. Insbesondere Fig.6 und 7 lassen gut erkennen, dass die Wendel- oder Schraubennut 10 an den Enden geschlossen ist und jeweils beabstandet zu den Enden des Schiebekolbens 5 endet.

Die Lage des Schiebekolbens 5 innerhalb des Ventilgehäuses 2 ist in dem gegenüber Fig.1 bis 3 abgewandelten Ausführungsbeispiel nach Fig.8 erkennbar. Das in dieser Figur gezeigte Ventil 1a hat ein innenliegendes Rückstellelement 8a in Form einer Druckfeder 9a. Der Schiebekolben 5a ist hier einstückig mit dem Betätigungsorgan 6 ausgebildet. In diesem Ausführungsbeispiel ist gut erkennbar, dass der Schiebekolben 5a innerhalb eines Gehäuse-Mittelabschnitts 11 in zwei an den Enden des Mittelabschnittes 11 angeordneten Dichtungen 12, 13 sowie in einem sich oberseitig anschließenden Führungsendstück 14 verschiebbar geführt ist. Auch in diesem Ausführungsbeispiel ist der Schiebekolben 5a in Schließstellung des Ventils gezeigt, wobei er mit Hilfe der Druckfeder 9a gegen einen Anschlag 15 innerhalb des Führungsendstückes 14 gehalten ist. Der Anschlag 15 ist durch eine Querschnittsverringerung in dem Führungsendstück 14 gebildet, an dem eine Ringschulter 16 im Übergangsbereich zwischen Schiebekolben 5a und Betätigungsorgan 6 anliegt.

Die Wendelnut 10 befindet sich in Schließstellung des Schiebkolbens 5a zwischen den beiden Dichtungen 12 und 13, wobei sie mit ihrem unteren Ende nahe an der Dichtung 12 liegt. Die Längshöhlung 17 innerhalb des Mittelabschnittes 11 ist in ihrem Durchmesser um einen Ringspalt 18 größer als der Durchmesser des Schiebekolbens 5a. Seitlich ist am Mittelabschnitt 11 der Medium-Einlass 3 angeordnet, so dass dieser über den Ringspalt mit der Nut 10 in Flüssigkeitsverbindung steht. Wird nun der Schiebekolben 5a entsprechend dem Pfeil Pf2 in Fig.8 in Öffnungsrichtung bewegt, gelangt die Wendelnut 10 auf die andere, untere Seite der Dichtung 12, so dass dementsprechend eine Flüssigkeitsverbindung zwischen dem Einlass 3 und einer Innenhöhlung 19 eines sich an den Mittelabschnitt 11 anschließenden Auslassendstückes 20 vorhanden ist. An die Innenhöhlung 19 des Auslassendstückes 20 ist der Auslass 4 angeschlossen. Anstatt der dargestellten seitlichen Anordnung kann der Auslass 4 auch in axialer Verlängerung am unteren Ende des Auslassendstückes 20 angeordnet sein. Der Einlass 3 und der Auslass 4 sind in den Ausführungsbeispielen an gleichen Umfangsstellen angeordnet, wobei der Einlass 3 am Mittelabschnitt 11 und der Auslass am Auslassendstück 20 angeordnet ist. Bei den Ein- und Auslässen 3, 4 sind jeweils Einschraubnippel 24 als Anschlüsse für Schlauchleitungen vorgesehen.

Da die Wendelnut 10, ausgehend von ihrem unteren Ende bis zum oberen Ende einen zunehmenden Querschnitt aufweist (vgl. auch Fig.4 bis 7) ändert sich mit dem Maß der Verschiebung des Schiebekolbens in Öffnungsrichtung auch der Durchlassquerschnitt, so dass entsprechend auch der Durchfluss zunimmt.

Die beiden Dichtungen 12 und 13 sind insbesondere durch O-Ringe gebildet, die vorzugsweise eine Gleitbeschichtung, insbesondere aus PTFE aufweisen. Durch die Gleitbeschichtung ist eine höhere Gleitfähigkeit und eine längere Lebensdauer gewährleistet.

Durch die vorzugsweise dreiteilige Bauweise des Ventilgehäuses mit einem Mittelabschnitt 11, einem Führungsendstück 14 sowie einem Auslassendstück 20 ist eine einfache Demontage und Montage des Ventils möglich. Die Gehäuseteile weisen in ihren Trennbereichen jeweils ineinandergreifende Absätze auf und sind vorzugsweise durch Verschraubungen miteinander verbunden.
An dem Ventilgehäuse 2 sind auf einer Seite Löcher 25 gegebenenfalls mit Gewinde vorgesehen, um das Ventil 1,1a an einem Trägerteil, zum Beispiel an einem Handhabungsstiel befestigen zu können.

Die in den Fig.1 bis 3 außen angeordnete Druckfeder 9 als Rückstellelement 8 ist zwischen dem Führungsendstück 14 und einem tellerförmigen, mit dem Betätigungsorgan 6 verbundenen Widerlager 21 angeordnet. Das Führungsendstück 14 weist oberseitig einem im Durchmesser reduzierten Ansatz 22 auf, der im Durchmesser kleiner ist als der lichte Innendurchmesser der Druckfeder 9, so dass diese einerseits seitlich geführt ist, andererseits aber durch die obere Stirnseite des Ansatzes 22 eine Anschlagfläche 23 gebildet ist, an der das Widerlager 21 in maximaler Öffnungsstellung des Ventils anliegt. Zur Anschlagbegrenzung in Schließstellung des Ventils kann auch bei der Ausführungsform nach Fig.1 bis 3 ein Anschlagbund vergleichbar mit der in Fig.8 gezeigten Anordnung vorgesehen sein. Die Hubbegrenzung ist zweckmäßiger Weise so dimensioniert, dass der Hub h der axialen Länge der Schiebekolben-Nut 10 entspricht bzw. etwas kleiner ist. Die Hubbegrenzung kann zumindest in Offenstellung verstellbar sein, damit der Durchfluss ökologisch und ökonomisch sinnvoll eingestellt werden kann, insbesondere bei Einsatz des Ventils in einem Reinigungs- und Desinfektionsgerät.

Bei der Ausführungsform gemäß Fig.8 und 9 ist das Rückstellelement 8a innenliegend angeordnet. Die verwendete Druckfeder 9a stützt sich einerseits am Gehäuseboden 26 des Auslassendstücks 20 und andererseits innerhalb einer Innenhöhlung am unteren Ende des Schiebekolbens 5a ab.

Bevorzugt sind die wesentlichen Teile des Ventils Drehteile, die sich dadurch einfach fertigen lassen. Der Schiebekolben besteht vorzugsweise aus Metall, während die Gehäuseteile aus Kunststoff, vorzugsweise aus POM bestehen. Das Dosier-Ventil 1, 1a kann bei Verwendung für ein Reinigungsgerät zum dosierten Abgeben von Reinigungsflüssigkeit bzw. von Desinfektionsmittel einen Durchmesser von 21 mm, bei einer Länge von 70 mm aufweisen. Der Schiebekolben 5, 5a kann dabei einen Durchmesser von etwa 8 mm bei einer Gesamtlänge von 50 mm aufweisen. Der Arbeitshub des Schiebekolbens 5, 5a kann beispielsweise 12 mm betragen, während die axiale Erstreckung der Nut bzw. der Wendelnut 10, 14 mm betragen kann. Die Wendel- oder Schraubennut kann sich über beispielsweise zwei oder drei Windungen mit einem Steigungswinkel von etwa 60° erstrecken. Die Breite der Nut kann von 0 mm an einem Ende bis zu etwa 1,2 mm am anderen Ende zunehmen, wobei das Durchlassvolumen an der jeweiligen Durchtrittsstelle bei der unteren Dichtung 12 auch von der Tiefe der Nut abhängt. Damit kann der Durchlassquerschnitt nicht nur von der Breite des jeweiligen Nutabschnittes sondern auch von deren Tiefe bestimmt werden. Dies ist gut in Fig. 7 erkennbar, wo die Wendel-Nut 10 am unteren Ende zusammenläuft und an der Oberfläche des Schiebekolbens 5, 5a endet. In Wendelrichtung nach oben nimmt sowohl die Tiefe als auch die Breite der Nut zu. Die Stirnenden sind somit in Wendelrichtung geschlossen.

## Patentansprüche

1. Ventil (1) mit einem Ventilgehäuse (2), das einen Medium-Einlass (3) und einen Medium-Auslass (4) sowie ein darin geführtes, verstellbares, mit einem Betätigungsorgan verbindbares Verschlusselement zum Öffnen und Schließen des Ventils aufweist, **dadurch gekennzeichnet, dass** das Verschlusselement als Schiebekolben (5,5a) mit wenigstens einer sich in Längsrichtung erstreckenden und in Schieberichtung hinsichtlich ihres Querschnitts stetig verändernden Nut (10) ausgebildet ist, die an ihren Enden geschlossen ist, dass eine Schiebeführung mit zwei in Längserstreckung des Verschlusselementes zueinander beabstandeten Dichtungen (12,13) vorgesehen ist, dass sich die Schiebekolben-Nut (10) in Schließstellung des Ventils zwischen den beiden Dichtungen befindet und Verbindung zu dem Medium-Einlass (3) aufweist und dass das Verschlusselement zumindest mit einem Teilbereich der Nut (10) über eine der Dichtungen (12) in einen mit dem Medium-Auslass (4) verbundenen Bereich (19) verschiebbar ist.

2. Ventil nach Anspruch 1, **dadurch gekennzeichnet, dass** der Querschnitt der sich in Längsrichtung erstreckenden Schiebekolben-Nut (10) in Schieberichtung vorzugsweise kontinuierlich abnimmt.

3. Ventil nach Anspruch 1 oder 2, **dadurch gekennzeichnet, dass** die Schiebekolben-Nut (10) als sich in Längsrichtung fortsetzende Wendel- oder Schraubennut (10) ausgebildet ist und sich vorzugsweise über mehr als eine Windung erstreckt.

4. Ventil nach einem der Ansprüche 1 bis 3, **dadurch gekennzeichnet, dass** der Schiebekolben (5,5a) einen Durchmesser von etwa 8mm hat und dass die zugehörige Wendel- oder Schraubennut (10) sich über zwei oder drei Windungen mit einem Steigungswinkel von etwa 60° erstreckt und dass die Breite der Nut (10) von Null Millimeter an einem Ende bis zu etwa 1,2 mm am anderen Ende zunimmt.

5. Ventil nach einem der Ansprüche 1 bis 4, **dadurch gekennzeichnet, dass** das Ventilgehäuse (2) einen Mittelabschnitt (11) mit einer Längshöhlung (17) zum Durchtritt des Schiebekolbens (5,5a) aufweist, die an ihren Endbereichen die Schiebedichtungen (12,13) für den Schiebekolben (5,5a) aufweist, dass die Längshöhlung (17) einen um einen Ringspalt (18) größeren Querschnitt als der Schiebekolben (5,5a) aufweist und dass sich an einem Ende des Mittelabschnitts (11) ein Auslassendstück (20) mit dem Medium-Auslass (4) anschließt und am anderen Ende des Mittelabschnitts ein Führungsendstück (14) mit einer Schiebeführung für den Schiebekolben (5,5a).

6. Ventil nach einem der Ansprüche 1 bis 5, **dadurch gekennzeichnet, dass** die Schiebedichtungen (12,13) durch O-Ringe gebildet sind, die vorzugsweise eine Gleitbeschichtung insbesondere aus PTFE aufweisen.

7. Ventil nach einem der Ansprüche 1 bis 6, **dadurch gekennzeichnet, dass** ein Rückstellelement (8,8a) zum Rückstellen des Verschlusselementes (5,5a) in Schließstellung vorgesehen ist.

8. Ventil nach Anspruch 7, **dadurch gekennzeichnet, dass** als Rückstellelement (8,8a) eine innerhalb des Gehäuses angeordnete Druckfeder (9,9a) vorgesehen ist, die sich einerseits am auslassseitigen Ende des Schiebekolbens (5,5a) und andererseits am Gehäuseboden (26) des Auslassendstücks (20) abstützt.

9. Ventil nach Anspruch 7, **dadurch gekennzeichnet, dass** das Verschlusselement (Schiebekolben 5,5a) mit einem das Ventilgehäuse (2) an einem Ende überragenden, schubstangenförmigen Betätigungsorgan (6) verbunden ist, und dass als Rückstellelement (8) eine äußere, zwischen dem Gehäuse-Führungsendstück (14) und einem vorzugsweise tellerförmigen, mit dem Betätigungsorgan verbundenen Widerlager (21) angeordnete Druckfeder (9) vorgesehen ist.

10. Ventil nach einem der Ansprüche 1 bis 9, **dadurch gekennzeichnet, dass** sowohl der Medium-Einlass (3) als auch der Medium-Auslass (4) seitlich am Gehäuse (2), vorzugsweise an gleichen Umfangsstellen angeordnet sind.

11. Ventil nach einem der Ansprüche 1 bis 9, **dadurch gekennzeichnet, dass** der Medium-Einlass (3) seitlich am Gehäuses und der Medium-Auslass (4) am unteren Ende des Auslassendstücks angeordnet sind.

12. Ventil nach einem der Ansprüche 1 bis 11, **dadurch gekennzeichnet, dass** der Medium-Einlass (3) und der Medium-Auslass (4) Einschraubnippel (24) als Anschlüsse für Schlauchleitungen aufweist.

13. Ventil nach einem der Ansprüche 5 bis 12, **dadurch gekennzeichnet, dass** der Mittelabschnitt (11), das Auslassendstück (20) und das Führungsendstück (14) des Ventilgehäuses (2) durch Verschraubungen miteinander verbunden sind.

14. Ventil nach einem der Ansprüche 1 bis 13, **dadurch gekennzeichnet, dass** eine Hubbegrenzung für die Endlagen des Schiebekolbens (5,5a) einerseits in Schließstellung und andererseits in maximaler Offenstellung mit einem maximalen Hub (h) etwa entsprechend der axialen Länge der Schiebekolben-Nut (10) vorgesehen ist und dass vorzugsweise eine Anschlagdämpfung in den Endlagen insbesondere in Form von elastischen Zwischenstücken vorgesehen ist.

15. Ventil nach Anspruch 14, **dadurch gekennzeichnet, dass** die Hubbegrenzung des Schiebekolbens (5,5a) zumindest in Offenstellung verstellbar ist.

16. Ventil nach einem der Ansprüche 1 bis 15, **dadurch gekennzeichnet, dass** der insbesondere zylindrische Schiebekolben (5,5a) aus Metall und die Gehäuseteile aus Kunststoff, vorzugsweise aus Polyoxymethylen (POM) bestehen.

17. Ventil nach einem der Ansprüche 1 bis 16, **dadurch gekennzeichnet, dass** es Teil eines Reinigungsgerätes ist zum dosierten Abgeben von Reinigungsflüssigkeit, Desinfektionsmittel oder dergleichen und unterhalb eines Flüssigkeitsvorratsbehälters angeordnet ist, mit dem der Medium-Einlass (3) des Ventils (1) verbunden ist.

## Claims

1. A valve (1) with a valve housing (2) which has a medium inlet (3) and a medium outlet (4), as well as an adjustable sealing element, guided in the therein, that can be connected to an actuating mechanism, for opening and closing the valve, **characterised in that** the sealing element is designed as a sliding piston (5, 5a) with at least one groove (10) that extends in the longitudinal direction and continuously changes its cross-section, which groove is sealed at its ends, **in that** a sliding guide with two seals (12, 13) that are spaced at a certain distance in the longitudinal extension of the sealing element is provided, **in that** the sliding piston groove (10) is located between the two seals in the closed position of the valve and is connected to the medium inlet (3), and **in that** the sealing element is displaceable at least with a partial area of the groove (10) via one of the seals (12) into an area (19 connected to the medium outlet (4).

2. The valve according to Claim 1, **characterised in that** the cross-section of the sliding piston groove (10) extending in the longitudinal direction reduces preferably continuously in the sliding direction.

3. The valve according to Claim 1 or 2, **characterised in that** the sliding piston groove (10) is designed as a spiral or helical groove (10) continuing in the longitudinal direction, and extends preferably over more than one turn.

4. The valve according to any one of Claims 1 to 3, **characterised in that** the sliding piston (5, 5a) has a diameter of approx. 8 mm, **in that** the associated spiral or helical groove (10) extends over two or three turns with a pitch angle of approx. 60°, and **in that** the width of the groove (10) increases from zero millimetre at one end to approx. 1.2 mm at the other end.

5. The valve according to any one of Claims 1 to 4, **characterised in that** the valve housing (2) has a central section (11) with a longitudinal cavity (17) for passage of the sliding piston (5, 5a), which cavity has in its end regions the sliding seals (12, 13) for the sliding piston (5, 5a), **in that** the longitudinal cavity (17) has a cross-section greater by an annular gap (18) than the sliding piston (5, 5a), and **in that** an outlet end piece (20) is connected at one end of the central section (11) to the medium outlet (4) and a guide end piece (14) is connected to a sliding guide for the sliding piston (5, 5a) at the other end of the central section.

6. The valve according to any one of Claims 1 to 5, **characterised in that** the sliding seals (12, 13) are formed by O rings which preferably have a sliding coating, in particular of PTFE.

7. The valve according to any one of Claims 1 to 6, **characterised in that** a readjusting element (8, 8a) is provided for returning the sealing element (5, 5a) to the closed position.

8. The valve according to Claim 7, **characterised in that** a compression spring (9, 9a), arranged inside the housing, is provided as the readjusting element (8, 8a), which spring is supported on the one hand at the end of the sliding piston (5, 5a) on the outlet side, and on the other on the housing bottom (26) of the outlet end piece (20).

9. The valve according to Claim 7, **characterised in that** the sealing element (sliding piston 5, 5a) is connected to a push rod shaped actuating mechanism (6) projecting from the valve housing (2) at one end, and **in that** an outer compression spring (9) arranged between the housing guide end piece (14) and a preferably plate-shaped thrust bearing (21) connected to the actuating mechanism is provided as the readjusting element (8).

10. The valve according to any one of Claims 1 to 9, **characterised in that** both the medium inlet (3) and the medium outlet (4) are arranged on the side of the housing (2), preferably at the same points on the periphery.

11. The valve according to any one of Claims 1 to 9, **characterised in that** the medium inlet (3) is arranged on the side of the housing and the medium outlet (4) is arranged at the lower end of the outlet end piece.

12. The valve according to any one of Claims 1 to 11, **characterised in that** the medium inlet (3) and the medium outlet (4) have screw-in nipples (24) as connections for hose pipes.

13. The valve according to any one of Claims 5 to 12, **characterised in that** the central section (11), the outlet end piece (20) and the guide end piece (14) of the valve housing (2) are connected to each other by screw connections.

14. The valve according to any one of Claims 1 to 13, **characterised in that** a stroke limitation is provided for the limit positions of the slide piston (5, 5a) in the closed position on the one hand, and in the maximum open position on the other, with a maximum stroke (h) approximately equal to the axial length of the sliding piston groove (10), and **in that** a stop damping device is preferably provided in the limit positions, particularly in the form of elastic intermediate pieces.

15. The valve according to Claim 14, **characterised in that** the stroke limitation of the sliding piston (5, 5a) is adjustable at least in the open position.

16. Valve according to any one of Claims 1 to 15, **characterised in that** the sliding piston (5, 5a), in particular a cylindrical piston, consists of the metal and the housing parts consist of plastic, preferably of polyoxymethylene (POM).

17. Valve according to any one of Claims 1 to 16, **characterised in that** it is part of a cleaning device for the dosed feeding of cleaning fluid, disinfectant or the like, and is arranged underneath a liquid storage tank to which the medium inlet (3) of the valve (1) is connected.

## Revendications

1. Soupape (1), avec un boîtier de soupape (2) qui présente une admission de fluide (3) et une sortie de fluide (4) ainsi qu'un obturateur mobile pour ouvrir et fermer la soupape, obturateur qui est guidé dans le boîtier et qui peut être relié à un organe d'actionnement, **caractérisée en ce que** l'obturateur est réalisé sous la forme d'un piston coulissant (5, 5a) doté d'au moins une rainure (10) s'étendant en direction longitudinale et à section continûment variable dans la direction de coulissement, rainure qui est fermée à ses extrémités, **en ce qu'**il est prévu une coulisse dotée de deux joints d'étanchéité (12, 13) mutuellement distants dans l'étendue longitudinale de l'obturateur, **en ce que** la rainure (10) du piston coulissant se trouve entre les deux joints d'étanchéité dans la position fermée de la soupape et présente une liaison vers l'admission de fluide (3), et **en ce que** l'obturateur peut, au moins avec une région partielle de la rainure (10), coulisser au-dessus d'un (12) des joints d'étanchéité dans une région (19) reliée à la sortie de fluide (4).

2. Soupape selon la revendication 1, **caractérisée en ce que** la rainure (10) du piston coulissant, laquelle s'étend en direction longitudinale, possède une section qui diminue de préférence continûment dans la direction de coulissement.

3. Soupape selon la revendication 1 ou 2, **caractérisée en ce que** la rainure (10) du piston coulissant est réalisée sous la forme d'une rainure (10) hélicoïdale ou encore en hélice se développant en direction longitudinale, et elle s'étend de préférence sur plus d'une spire.

4. Soupape selon l'une des revendications 1 à 3, **caractérisée en ce que** le piston coulissant (5, 5a) possède un diamètre d'environ 8 mm et **en ce que** la rainure associée (10) hélicoïdale ou encore en hélice s'étend sur deux ou trois spires avec un angle d'hélice d'environ 60°, et **en ce que** la largeur de la rainure (10) augmente depuis zéro millimètre à une extrémité jusqu'à environ 1,2 mm à l'autre extrémité.

5. Soupape selon l'une des revendications 1 à 4, **caractérisée en ce que** le boîtier de soupape (2) présente une partie centrale (11) pourvue d'une cavité longitudinale (17) pour le passage du piston coulissant (5, 5a), qui présente dans ses régions terminales les joints d'étanchéité de coulisse (12, 13) pour le piston coulissant (5, 5a), **en ce que** la cavité longitudinale (17) présente une section qui est plus grande que celle du piston coulissant (5, 5a) de la valeur d'une fente annulaire (18), et **en ce qu'**un embout de sortie (20) se raccorde à la sortie de fluide (4) à une extrémité de la partie centrale (11), et un embout de guidage (14) pourvu d'une coulisse pour le piston coulissant (5, 5a) se raccorde à l'autre extrémité de la partie centrale.

6. Soupape selon l'une des revendications 1 à 5, **caractérisée en ce que** les joints d'étanchéité de coulisse (12, 13) sont formés par des joints toriques qui présentent de préférence un revêtement de glissement, notamment en PTFE.

7. Soupape selon l'une des revendications 1 à 6, **caractérisée en ce qu'**il est prévu un élément de rappel (8, 8a) pour rappeler l'obturateur (5, 5a) en position fermée.

8. Soupape selon la revendication 7, **caractérisée en ce qu'**il est prévu comme élément de rappel (8, 8a) un ressort de pression (9, 9a) disposé à l'intérieur du boîtier, ressort qui s'appuie d'une part contre l'extrémité de sortie du piston coulissant (5, 5a) et d'autre part contre le fond de boîtier (26) de l'embout de sortie (20).

9. Soupape selon la revendication 7, **caractérisée en ce que** l'obturateur (piston coulissant 5, 5a) est relié à un organe d'actionnement (6) en forme de bielle de poussée qui dépasse du boîtier de soupape (2) à une extrémité, et **en ce qu'**il est prévu comme élément de rappel (8) un ressort de pression extérieur (9) disposé entre l'embout de guidage (14) du boîtier et un élément (21) de contre-appui de préférence en forme de disque, relié à l'organe d'actionnement.

10. Soupape selon l'une des revendications 1 à 9, **caractérisée en ce que** l'admission de fluide (3) tout comme la sortie de fluide (4) sont disposées latéralement sur le boîtier (2), de préférence en de mêmes points de la circonférence.

11. Soupape selon l'une des revendications 1 à 9, **caractérisée en ce que** l'admission de fluide (3) est disposée latéralement sur le boîtier et la sortie de fluide (4) est disposée à l'extrémité inférieure de l'embout de sortie.

12. Soupape selon l'une des revendications 1 à 11, **caractérisée en ce que** l'admission de fluide (3) et la sortie de fluide (4) présentent des manchons filetés (24) comme raccordements pour des conduites flexibles.

13. Soupape selon l'une des revendications 5 à 12, **caractérisée en ce que** la partie centrale (11), l'embout de sortie (20) et l'embout de guidage (14) du boîtier de soupape (2) sont mutuellement reliés par des assemblages vissés.

14. Soupape selon l'une des revendications 1 à 13, **caractérisée en ce qu'**il est prévu une limitation de course pour les positions finales du piston coulissant (5, 5a) d'une part en position fermée et d'autre part en position ouverte maximale, avec une course maximale (h) correspondant approximativement à la longueur axiale de la rainure (10) du piston coulissant, et **en ce qu'**il est de préférence prévu un amortissement de butée dans les positions finales, notamment sous la forme d'éléments élastiques intercalés.

15. Soupape selon la revendication 14, **caractérisée en ce que** la limitation de course du piston coulissant (5, 5a) est réglable au moins en position ouverte.

16. Soupape selon l'une des revendications 1 à 15, **caractérisée en ce que** le piston coulissant (5, 5a) notamment cylindrique est réalisé en métal et les parties de boîtier en matière plastique, de préférence en polyméthylène oxyde (POM).

17. Soupape selon l'une des revendications 1 à 16, **caractérisée en ce qu'**elle fait partie d'un appareil de nettoyage pour délivrer de manière dosée du liquide de nettoyage, du désinfectant ou analogue, et elle est disposée en dessous d'un réservoir de liquide auquel est reliée l'admission de fluide (3) de la soupape (1).
